**Europäisches Patentamt**

**European Patent Office**

**Office européen des brevets**

(19)

(11) Veröffentlichungsnummer: **0 174 280**
**B1**

(12) # EUROPÄISCHE PATENTSCHRIFT

(45) Veröffentlichungstag der Patentschrift:
27.04.88

(51) Int. Cl.⁴: **B 23 F 5/04**

(21) Anmeldenummer: 85810398.9

(22) Anmeldetag: 03.09.85

(54) **Verfahren und Vorrichtung zur Bearbeitung eines Stirnzahnrades mittels eines rotierenden, zahnradartigen Werkzeuges.**

(30) Priorität: 05.09.84 CH 4236/84

(43) Veröffentlichungstag der Anmeldung:
12.03.86 Patentblatt 86/11

(45) Bekanntmachung des Hinweises auf die Patenterteilung:
27.04.88 Patentblatt 88/17

(84) Benannte Vertragsstaaten:
CH DE FR GB IT LI

(56) Entgegenhaltungen:
DE-A-3 150 961
DE-B-2 744 562

(73) Patentinhaber: **REISHAUER AG., Limmatstrasse 87,
CH- 8005 Zürich (CH)**

(72) Erfinder: **Zubler, Ernst, In der Ey 40, CH- 8047
Zürich (CH)**

(74) Vertreter: **Justitz- Wormser, Daisy P., Dipl.-
Chem., PATENTANWALTS- BUREAU ISLER AG
Postfach 6940 Walchestrasse 23, CH- 8023 Zürich
(CH)**

EP 0 174 280 B1

LIBER, STOCKHOLM 1988

## Beschreibung

Bei einem bekannten Verfahren gemäss Oberbegriff des Anspruchs 1 (DE-OS-3 150 961) erfolgt die Spanabnahme durch eine Kreisvorschubbewegung, indem der Grunddrehzahl des Werkstückes oder des Werkzeuges eine positive und anschliessend negative Zusatz-Drehbewegung überlagert wird. Dieses Verfahren hat sich sehr bewährt. Allerdings besteht ein Nachteil dieses Verfahrens darin, dass die Vorschubbewegung einer konstanten Grundbewegung überlagert werden muss, was messtechnisch schwierig zu erfassen ist und deshalb einen hohen technischen Aufwand erfordert.

Zweck der vorliegenden Erfindung ist es, ein Verfahren und eine Vorrichtung zu schaffen, bei welchen die erwähnten Nachteile vermieden werden. Diese Aufgabe wird verfahrensmässig durch die kennzeichnenden Merkmale des Anspruchs 1 und vorrichtungsmässig durch die kennzeichnenden Merkmale des Anspruchs 6 gelöst.

Aus der DE-AS-2 744 562 ist eine Vorrichtung bekannt, mit welcher ein rotierendes Zahnrad gegenüber einer rotierenden Schleifschnecke vor Bearbeitungsbeginn ausgerichtet werden kann. Dazu wird bei vergrössertem Achsabstand ein Fühler mit zwei pneumatischen Messdüsen zwischen Zahnrad und Schleifschnecke eingefahren. Durch Vergleich der Signale der Messdüsen miteinander können mit einer Zusatzdrehbewegung die Zahnlücken des Zahnrades mit den Zähnen der Schleifschnecke ausgerichtet werden, so dass nach erfolgter Ausrichtung die Schleifschnecke auf den Soll-Fertigungs-Achsabstand eingefahren werden kann. Damit kann ein automatisches Aufspannen des Zahnrades auf den Werkstückdorn ohne Anhalten dieses Dornes und vor allem der Schleifschnecke erreicht werden.

Nachstehend wird ein Ausführungsbeispiel der Erfindung anhand einer Zeichnung näher erläutert, welche schematisch die Lage des Werkzeuges und des Werkstückes während der Bearbeitung und die möglichen Vorschub-Bewegungsrichtungen zeigt.

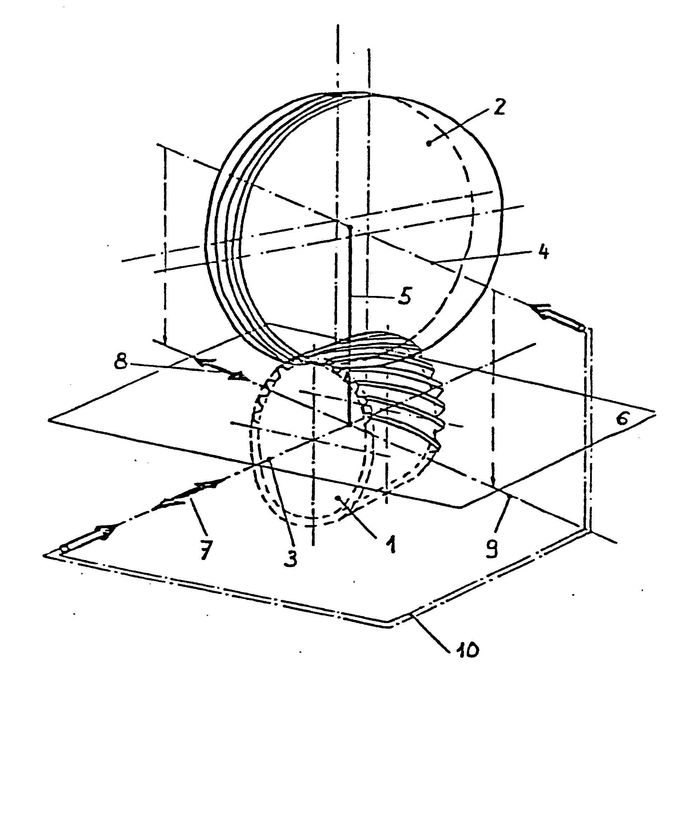

In der Figur ist ein mögliches Beispiel der Anwendung des erfindungsgemässen Verfahrens dargestellt. Eine globoid- oder hyperboloidähnliche Schleifschnecke 2 (nur schematisch dargestellt) steht mit dem herzustellenden Werkstück 1, welches hier als schrägverzahntes Zylinderrad dargestellt ist, im Eingriff. Wie im Oberbegriff des Patentanspruchs 1 dargelegt ist, findet nach erfolgter Annäherung der Schleifschnecke 2 an das Werkstück 1 auf den Soll-Fertigungs-Achsabstand 5 noch keine Berührung der beiden Zahnprofile statt, da die Bogenzahndicke des Werkzeuges 2 kleiner ist als die vorgearbeitete Zahnlückenweite des Werkstückes 1. Durch eine relative Vorschubbewegung zwischen dem Werkzeug 2 und dem Werkstück 1, die in einer Ebene 6

senkrecht zur Achsabstandslinie 5, vorzugsweise in Richtung der Werkstückachse 3 oder Werkzeugachse 4 bzw. in der Projektion 9 der letzteren erfolgt, werden zuerst die einen Flanken aller Werkstückzähne und anschliessend, nach einer Umkehrung der Richtung der Vorschubbewegung, die anderen Flanken bearbeitet. Die Vorschubbewegung könnte auch durch eine Bewegung, welche sich aus den beiden Bewegungen in den Richtungen 7 und 8 zusammensetzt, gebildet werden. Der Ablauf der Vorschubbewegung kann linear, sich stetig ändernd oder in abgestuften Schritten erfolgen. Der Ablauf kann aber auch aus den drei vorerwähnten Möglichkeiten zusammengesetzt sein.

Es Abrichten des Werkzeuges kann, wie aus der DE-OS-3 150 961 bekannt, mit einem Abrichtwerkzeug, welches in der Geometrie dem herzustellenden Werkstück 1 entspricht, ausgeführt werden. Beim Abrichtvorgang ist Bedingung, dass das Abrichtwerkzeug die genau gleiche Relativbewegung bezüglich dem Werkzeug 2 ausführt, wie sie bei der Bearbeitung des Werkstückes 1 vollzogen wird, insofern am Werkstück 1 das gleiche Zahnweitenmass erzeugt werden soll, wie am Abrichtwerkzeug vorhanden. Andernfalls kann durch unterschidlich grosse Vorschubbewegungen beim Abrichten und beim Schleifen die Grösse des Zahnweitenmasses am Werkstück 1 beeinflusst werden.

Der synchrone Antrieb von Werkzeug 2 und Werkstück 1 erfolgt durch eine nicht dargestellte mechanische oder elektronische Kopplung 10.

Im dargestellten Ausführungsbeispiel wird ein aussenverzahntes Werkstück mit einer aussenverzahnten gewinde- oder schneckenförmigen Schleif- oder Hohnscheibe bearbeitet. Dasselbe Verfahren eignet sich jedoch auch zur Bearbeitung eines innenverzahnten Werkstücks mit einem aussenverzahnten, tonnenförmigen Werkzeug oder zur Bearbeitung eines aussenverzahnten Werkstücks mit einem innenverzahnten globoid- oder hyperboloidähnlichen Werkzeug. Bei kleinerem Achswinkel, z. B. zum Schaben oder Hohnen, sind die Werkzeuge zahnradartig.

## Patentansprüche

1. Verfahren zur Bearbeitung der Zähne eines rotierenden Zahnrades (1) mittels mindestens eines rotierenden, zahnradartigen oder schneckenförmigen Werkzeuges (2), welches mit dem Werkstück (1) in Eingriff bringbar ist und bei Erreichen des Soll-Fertigungs-Achsabstandes von einer Stirnseite des Werkstück (1) bis zur anderen Stirnseite desselben anliegt, wobei das Verhältnis der Drehzahlen einem aus dem Verhältnis der Zähnezahlen von Werkstück (1) und Werkzeug (2) resultierenden Grunddrehzahlenverhältnis entspricht, und das Werkzeug (2), dessen Bogenzahndicke kleiner ist als das Fertigmass der Bogenzahnlückenweite des zu erzeugenden Werstücks (1), relativ zum letzteren radial zugestellt wird, bis zum Erreichen des Soll-Fertigungs-Achsabstandes, dadurch gekennzeichnet, dass nach Erreichen des Soll-Fertigungs-Achsabstandes in einer Ebene senkrecht zur Achsabstandslinie (5) zwischen Werkzeug (2) und Werkstück (1) eine Vorschubbewegung relativ zwischen Werkzeug (2) und Werkstück (1) ausgeführt wird.

2. Verfahren nach Anspruch 1, dadurch gekennzeichnet, dass zuerst die einen Flanken aller Werkstückzähne und anschliessend mit umgekehrter Vorschubrichtung mit dem gleichen Werkzeug (2) die andern Flanken bearbeitet werden.

3. Verfahren nach Anspruch 1 oder 2, dadurch gekennzeichnet, dass die relative Vorschubbewegung zwischen Werkzeug (2) und Werkstück (1) eine lineare Verschiebung des Werkstücks (1) in dessen Achsrichtung (7) oder des Werkzeug (2) in dessen Achsrichtung (8) ist.

4. Verfahren nach einem der Ansprüche 1 bis 3, dadurch gekennzeichnet, dass gegen das Ende des Vorschubweges die Vorschubgeschwindigkeit vermindert wird, und dass am Ende des Vorschubweges die relative Lage zwischen Werkzeug (2) und Werkstück (1) während mindestens einer Werkstückumdrehung beibehalten wird.

5. Verfahren nach einem der Ansprüche 1, 3 oder 4, dadurch gekennzeichnet, dass beide Flanken der Werkstückzähne gleichzeitig mit zwei in Umfangsrichtung des Werkstücks (1) gegeneinander versetzten Werkseugen (2) bearbeitet werden, wobei die Vorschubbewegung durch Verschieben der Werkzeuge (2) erfolgt.

6. Vorrichtung zur Durchführung des Verfahrens nach einem der Ansprüche 1 bis 5, umfassend ein drehbares, zahnradartiges oder schneckenförmiges Werkzeug (2), welches durch radiale Zustellung mit einem Werkstück (1) in Eingriff bringbar ist, und beim Erreichen des Soll-Fertigungs-Achsabstandes von einer Stirnseite des Werkstücks (1) bis zur andern Stirnseite desselben anliegt, wobei das Werkstück (1) durch eine mechanische oder elektronische Kopplung (10) synchron mit dem Werkzeug (2) antreibbar ist, dadurch gekennzeichnet, dass das Werkzeug (2) relativ zum Werkstück (1) in einer Ebene (6) senkrecht zur Achsabstandslinie (5) zwischen Werkzeug (2) und Werkstück (1) verschiebbar ist.

7. Vorrichtung nach Anspruch 6, dadurch gekennzeichnet, dass das Werkzeug (2) längs seiner Achse (4) oder das Werkstück (1) längs seiner Achse (3) verschiebbar ist.

8. Vorrichtung nach Anspruch 7, dadurch gekennzeichnet, dass zwei längs ihrer Achse (4) verschiebbare Werkzeuge (2) in Umfangsrichtung des Werkstücks (1) gegeneinander versetzt angeordnet sind.

**Claims**

1. A method of machining the teeth of a rotating gear (1) by means of a rotating gear-like or worm-like tool (2) which is engageable with the workpiece (1) and, upon the set value production between-axes distance being reached, is in engagement with the workpiece from one end face thereof to the other, the ratio of the speeds corresponding to a basic speed ratio resulting from the ratio between the tooth numbers of the workpiece (1) and tool (2); and the tool (2), whose circular tooth thickness is less than the finished dimension of the tooth space width of the required workpiece (1), is in fed radially relatively thereto until reaching the said between-axes distance, characterised in that after the said between-axes distance has been reached, a relative advancing movement between the tool (2) and workpiece (1) is performed in a plane perpendicular to the between-axes distance line (5) between the tool (2) add the workpiece (1).

2. A method according to claim 1, characterised in that the flanks on one side of all the tool teeth are machined first, whereafter the same tool machines the other flanks in the reverse direction of feeding.

3. A method according to claim 1 or 2, characterised in that the relative advancing movement between the tool (2) and workpiece (1) is a linear displacement of the workpiece (1) in its axial direction (3) or of the tool (2) in its axial direction (8).

4. A method according to any of claims 1 - 3, characterised in that the rate of advance is reduced near the end of the travel and at the end thereof the relative position between the tool (2) and workpiece (1) is retained during at least one revolution of the workpiece.

5. A method according to any of claims 1, 3 or 4, characterised in that the two flanks of the workpiece teeth are machined simultaneously by means of two tools (2) moved opposite to one another in the peripheral direction of the workpiece (1), the advancing movement being effected by displacement of the tools (2).

6. An apparatus for performing the method according to any of claims 1 - 5 and comprising a rotatable gear-like or worm-like tool (2) engageable by radial infeeding with a workpiece (1) and, upon the set-value production between-axes distance being reached, engaging with the workpiece (1) from one end face thereof to its other end face, the workpiece (1) being drivable synchronously with the tool (2) by a mechanical or electronic coupling (10), characterised in that the tool (2) is movable relatively to the workpiece (1) in a plane (6) perpendicularly to the between-axes distance line (5) between the tool (2) and workpiece (1).

7. An apparatus according to claim 6, characterised in that the tool (2) is movable along its axis (4) or the workpiece (1) is movable along its axis (3).

8. An apparatus according to claim 7, characterised in that two tools (2) movable along their axis (4) are disposed offset from one another in the peripheral direction of the workpiece (1).

## Revendications

1. Procédé pour travailler les dents d'une roue dentée (1) rotative, à l'aide d'au moins un outil (2) rotatif, en forme de roue dentée ou en forme de vis, que l'on peut mettre en prise avec la pièce (1) à produire et qui, lorsqu'est atteinte la distance de l'axe de finition de consigne, s'appuie d'un côté frontal de la pièce (1) jusqu à l'autre côté frontal, le rapport des vitesses de rotation correspondant à un rapport entre les vitesses de rotation de base résultant du rapport entre les nombres de dents de la pièce (1) à produire et de l'outil (2), et l'outil (2), dont l'épaisseur des dents incurvées est inférieure à la cote finale des intervalles entre dents incurvées de la pièce (1) à produire étant rapproché radialement de cette pièce jusqu'à ce soit atteinte la distance de l'axe de finition de consigne, procédé caractérisé en ce que, une fois atteinte la distance de l'axe de finition de consigne, un mouvement d'avance relative entre l'outil (2) et la pièce (1) à réaliser est effectué dans un plan perpendiculaire à la ligne (5) de distance d'axe entre l'outil (2) et la pièce (1).

2. Procédé selon la revendication 1, caractérisé en ce que tout d'abord les premiers flancs de toutes les dents de la pièce à usiner sont travaillés puis les autres flancs sont travaillés à l'aide du même outil (2) animé d'un mouvement d'avance inverse.

3. Procédé selon la revendication 1 ou 2, caractérisé en ce que le mouvement d'avance relative entre l'outil (2) et la pièce (1) à usiner est un déplacement linéaire de la pièce (1) dans le sens de son axe (7) ou dans le sens de l'axe (8) de l'outil (2).

4. Procédé selon l'une des revendications 1 à 3, caractérisé en ce que, vers la fin du mouvement d'avance, la vitesse d'avance est diminuée et en ce qu'à la fin du mouvement d'avance la position relative entre l'outil (2) et la pièce (1) à usiner est maintenue pendant au moins une rotation de la pièce à usiner.

5. Procédé selon l'une des revendications 1, 3 ou 4, caractérisé en ce que les deux flancs des dents de la pièce à usiner sont simultanément travaillés à l'aide de deux outils (2) mutuellement décalés dans le sens de la périphérie de la pièce (1) à produire, le mouvement d'avance étant obtenu par coulissage des outils (2).

6. Dispositif pour la mise en oeuvre du procédé selon l'une des revendications 1 à 5, comprenant un outil (2) rotatif, en forme de roue dentée ou de vis, qui peut être mis en prise, par déplacement radial, avec une pièce (1) à produire et qui, lorsqu'est atteinte la distance de l'axe de finition de consigne peut s'appliquer d'un côté frontal de la pièce (1) à l'autre côté frontal de celle-ci, la pièce (1) à produire pouvant être entraînée, par un couplage (10) mécanique ou électronique, en synchronisme avec l'outil (2), dispositif caractérisé en ce que l'outil (2) peut être déplacé dans un plan (6) perpendiculairement à la ligne (5) de distance entre axes de l'outil (2) et de la pièce (1) à produire

7. Dispositif selon la revendication 6, caractérisé en ce que l'outil (2) peut être déplacé le long de son axe (4) ou bien la pièce (1) peut être déplacée le long de son axe (3).

8. Dispositif selon la revendication 7, caractérisé en ce que deux outils (2), pouvant être déplacés le long de leur axe (4) sont placés en étant mutuellement décalés dans la direction de la périphérie de la pièce (1) à produire.